(19) Europäisches Patentamt
European Patent Office
Office européen des brevets

(11) **EP 1 653 205 B1**

(12) **FASCICULE DE BREVET EUROPEEN**

(45) Date de publication et mention
de la délivrance du brevet:
**10.12.2008 Bulletin 2008/50**

(51) Int Cl.:
***G01J 5/20*** *(2006.01)*

(21) Numéro de dépôt: **05300794.4**

(22) Date de dépôt: **05.10.2005**

(54) **Détecteur bolométrique à isolation thermique par constriction**

Bolometrischer Detektor mit thermischer Isolierung durch Verengung

Bolometric detector with thermal isolation by constriction

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **28.10.2004 FR 0411475**

(43) Date de publication de la demande:
**03.05.2006 Bulletin 2006/18**

(73) Titulaire: **COMMISSARIAT A L'ENERGIE
ATOMIQUE**
**75752 Paris Cédex 15 (FR)**

(72) Inventeurs:
 • **OUVRIER-BUFFET, Jean-Louis
 74320, SEVRIER (FR)**
 • **BISOTTO, Sylvette
 38000, GRENOBLE (FR)**

(74) Mandataire: **Vuillermoz, Bruno et al
Cabinet Laurent & Charras
"Le Contemporain"
50, Chemin de la Bruyère
69574 Dardilly Cédex (FR)**

(56) Documents cités:
**EP-A- 0 371 657          US-A- 2 393 196
US-A- 5 367 167          US-A- 5 656 848
US-A- 6 144 285**

**Description**

## DOMAINE TECHNIQUE

La présente invention concerne un détecteur bolométrique, ainsi que le dispositif de détection infrarouge mettant en oeuvre de tels détecteurs.

L'invention trouve notamment son domaine d'application dans l'imagerie infrarouge.

## ETAT ANTERIEUR DE LA TECHNIQUE

Dans le domaine des détecteurs infrarouges, il est connu de mettre en oeuvre des dispositifs agencés sous forme matricielle, et susceptibles de fonctionner à la température ambiante, c'est à dire ne nécessitant pas de refroidissement, contrairement aux dispositifs de détection appelés « détecteurs quantiques, », qui eux nécessitent un fonctionnement à très basse température, typiquement celle de l'azote liquide.

Ces détecteurs non refroidis utilisent traditionnellement la variation d'une grandeur physique d'un matériau approprié, en fonction de la température au voisinage de 300 K. Dans le cas des détecteurs bolométriques, cette grandeur physique est la résistivité électrique.

Un tel détecteur non refroidi associe généralement :

- des moyens d'absorption du rayonnement infrarouge et de conversion de ce dernier en chaleur ;
- des moyens d'isolation thermique du détecteur, de telle sorte à permettre à celui-ci de s'échauffer sous l'action du rayonnement infrarouge ;
- des moyens de thermométrie, qui dans le cadre d'un détecteur bolométrique mettent en oeuvre un élément résistif ;
- et des moyens de lecture des signaux électriques fournis par les moyens de thermométrie.

Les dispositifs de détection destinés à l'imagerie infrarouge sont réalisés sous la forme d'une matrice de détecteurs élémentaires selon une ou deux dimensions, positionnés sur un substrat, généralement réalisé en silicium, qui comporte des moyens d'excitation électrique desdits détecteurs élémentaires, et des moyens de pré-traitement des signaux électriques générés par ces détecteurs élémentaires.

Ces moyens d'excitation électrique et de pré-traitement sont formés sur le substrat et constituent un circuit de lecture.

Un dispositif comportant une matrice de détecteurs élémentaires et un circuit de lecture associé est généralement placé dans un boîtier et relié, notamment électriquement, au milieu extérieur par des techniques classiques. Dans un tel boîtier, la pression est réduite afin de limiter les pertes thermiques. Ce boîtier est en outre muni d'une fenêtre infrarouge transparente au rayonnement à détecter.

Pour observer une scène par l'intermédiaire de ce détecteur, on projette la scène à travers une optique adaptée sur la matrice de détecteurs élémentaires, et les stimuli électriques cadencés sont appliqués, par l'intermédiaire du circuit de lecture (également prévu à cet effet), à chacun des détecteurs élémentaires, ou à chaque rangée de tels détecteurs, afin d'obtenir un signal électrique constituant l'image de la température atteinte par chaque détecteur élémentaire.

Ce signal est traité de manière plus ou moins élaborée par le circuit de lecture, puis éventuellement par un dispositif électronique extérieur au boîtier, afin de générer une image thermique de la scène observée.

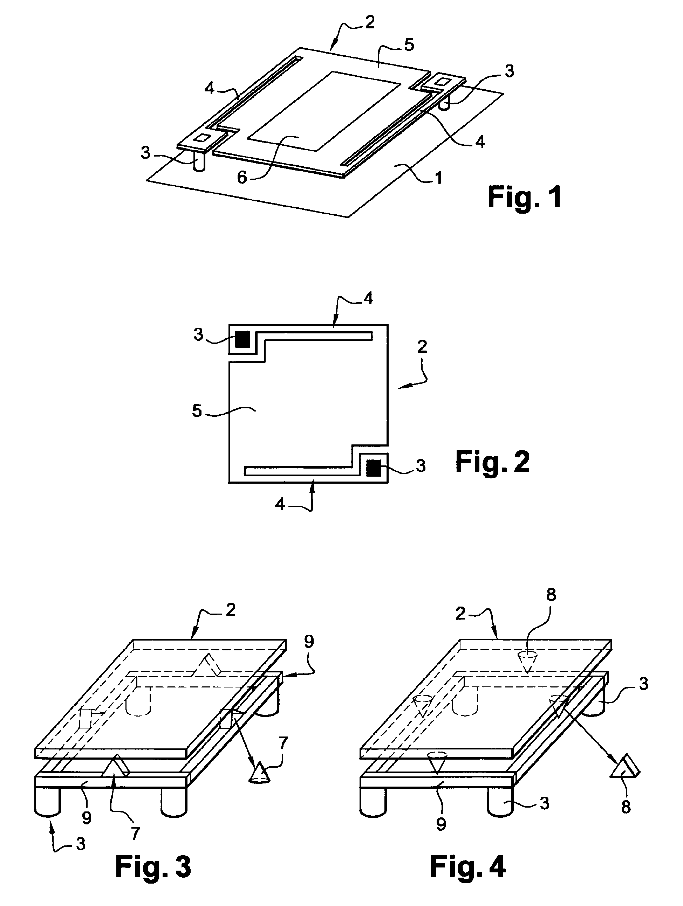

On a représenté en relation avec les figures 1 et 2, une vue simplifiée d'un détecteur bolométrique de l'art antérieur, respectivement en perspective et du dessus. Au sein de celles-ci, on a représenté par la référence (1), le substrat silicium recevant notamment le circuit de lecture.

Ce substrat reçoit de fait un circuit électronique intégré, comportant d'une part, les dispositifs générant les stimuli dudit détecteur, et les organes de lecture des signaux émanant de celui-ci, et d'autre part, des composantes de multiplexage, permettant de sérialiser des signaux issus des différents détecteurs, et de les transmettre vers un nombre réduit de sorties, afin d'être exploités par un système de traitement et notamment d'imagerie de facture traditionnelle.

Le détecteur proprement dit est constitué d'une membrane suspendue (2), au dessus du substrat (1), et dont la plus grande partie est destinée à absorber le rayonnement incident et le transformer en chaleur, puis en un signal électrique.

Ladite membrane (2) est suspendue au-dessus du circuit de lecture, et donc notamment du substrat (1) au moyen de plots, piliers ou points d'ancrage (3), et de manière plus générique, dénommés zones ou structures de support.

Ce faisant, on définit un espace vide entre le substrat (1) et la membrane (2), s'étendant sur une hauteur typique comprise entre 1 et 5 $\mu$m.

Ces structures de support (3) sont essentiellement verticales. Elles sont elles-mêmes conductrices de l'électricité, et permettent ainsi d'amener les potentiels d'excitation vers des parties conductrices ou électrodes entrant dans la constitution du détecteur bolométrique proprement dit via des structures planes allongées (4), également conductrices électriquement, mais résistantes thermiquement. Ces structures planes et allongées (4) sont classiquement dénommées bras.

La membrane suspendue (2) comporte fondamentalement une couche (5) d'absorption du rayonnement thermique incident.

Cette absorption de rayonnement induit l'échauffement de cette couche, qui transfère la température ainsi accumulée à une couche (6), déposée sur la membrane, jouant le rôle de thermomètre, et réalisée en un matériau bolométrique.

**[0018]** Ce matériau bolométrique est traditionnellement constitué de silicium polycristallin ou amorphe de type p ou n, faiblement ou fortement résistif, mais peut également être constitué d'oxyde de vanadium ($V_2O_5$ ou $VO_2$) élaboré dans une phase semiconductrice, ou encore de ferrites à structure spinelle.

**[0019]** Afin de définir le signal électrique au niveau du détecteur bolométrique, on met donc en oeuvre, ainsi que déjà dit, des électrodes, classiquement situées dans le plan du détecteur, et on parle alors d'électrodes coplanaires, ou d'électrodes superposées, également dénommée structure « sandwich », tel que cela ressort par exemple du brevet américain US-A-5 021 663.

**[0020]** Parmi les différents paramètres intervenant au niveau des performances d'un détecteur bolométrique non refroidi, figure notamment la maîtrise de conception et de construction des détecteurs élémentaires, et notamment des micro-ponts et des piliers, notamment l'isolation thermique entre le circuit de lecture (1) et la membrane suspendue (2).

**[0021]** Comme déjà indiqué, le volume entre la partie active du bolomètre et le substrat comportant le circuit de lecture, éventuellement revêtu d'une couche de réflexion du rayonnement infrarouge, est vide de matière en dehors des piliers ou zones de support (3), et ce, dans le but d'éviter les pertes thermiques par conduction solide.

**[0022]** Ce volume est d'ailleurs habituellement rempli par une faible pression de gaz, afin de limiter la convexion et la conduction par les gaz.

**[0023]** D'une manière générale, l'isolation thermique de la membrane (2) est réalisée par l'intermédiaire des bras d'isolement (4), relativement étroits, et constitués de couches les plus minces possibles. Selon leurs modes de réalisation, ces bras d'isolement (4) sont situés dans le même plan que la membrane (2) ou encore réalisées en dessous de celle-ci (voir par exemple US-A-5 367 167).

**[0024]** S'ils remplissent de manière relativement satisfaisante leur rôle d'isolation et de support de la membrane, ces bras présentent cependant l'inconvénient de pénaliser les performances du détecteur bolométrique en raison de la diminution du facteur de remplissage qu'ils engendrent, notamment lorsqu'ils sont situés dans le plan de ladite membrane bolométrique. Accroître de manière importante la longueur de ces bras, ou réduire sensiblement leur largeur et/ou leur épaisseur met en péril la rigidité de la structure. En effet ces éléments constituent un point de faiblesse mécanique affectant la stabilité des microponts qui peuvent alors basculer ou se déformer et corollairement induire la mise en contact de la membrane avec le substrat, créant ainsi des ponts thermiques détruisant l'isolation thermique de ladite membrane.

## EXPOSE DE L'INVENTION

**[0025]** L'invention vise tout d'abord à optimiser l'isolation thermique de la membrane d'un détecteur bolométrique, sans dégrader pour autant la stabilité mécanique notamment des microponts qui la suspendent. Elle vise ensuite à améliorer les performances d'un tel détecteur en augmentant le facteur de remplissage.

**[0026]** A cette fin, l'invention consiste non pas à jouer uniquement sur les éléments dimensionnels des bras, mais davantage à intervenir sur la structure de la résistance thermique au niveau de la liaison entre les microponts et le support.

**[0027]** Ainsi, elle concerne un détecteur bolométrique comprenant

- une partie absorbante, destinée à transformer le rayonnement électromagnétique incident en calories ;
- une partie active, elle-même constituée :
  - d'une zone sensible réalisée en un matériau bolométrique, dont la résistivité varie, de manière connue, avec la température ;
  - d'électrodes en contact avec le matériau bolométrique sur au moins partie de leur surface ;
- des piliers, destinés à maintenir ladite partie active suspendue au dessus d'un substrat recevant notamment le circuit de lecture associé audit détecteur, et à assurer la conduction électrique entre ledit circuit de lecture et ladite partie active ;

lesdits piliers présentant des régions de section non uniforme entre leur point de contact avec le substrat et leur zone de solidarisation à la partie active ; ou sont associés à des éléments présentant de telles non-uniformités ces non-uniformités étant propres à générer à leur niveau une zone de constriction des flux thermiques susceptible de s'établir entre ladite partie active et le substrat, et lesdits piliers étant directement en contact entre le substrat et la partie active, ou entre le substrat et lesdits éléments associés.

**[0028]** En d'autres termes, l'invention consiste à intervenir au niveau de la morphologie des zones de support pour optimiser l'isolation thermique de la membrane suspendue. Elle met en oeuvre le phénomène physique dit de « constriction ».
La réalisation d'un contact thermique ponctuel ou de très faible section entre deux matériaux fait apparaître un phénomène de constriction des lignes de flux, qui se traduit par un accroissement notable de la résistance thermique de contact.

**[0029]** Ce phénomène peut être avantageusement utilisé dans les technologies des détecteurs non refroidis, et donc notamment dans le domaine des détecteurs bolométriques, pour accroître l'isolation thermique desdits détecteurs. Ce faisant, ce phénomène s'applique particulièrement bien, mais toutefois pas exclusivement à la réalisation de résistance de contact verticale.

**[0030]** Ce phénomène de constriction peut être décrit

de la manière suivante. On considère le cas fondamental d'un milieu semi-infini de conductivité thermique k, limité par un plan supposé isolé excepté sur une surface s, de dimension caractéristique a, d'étendue limitée, et sur laquelle on impose une température uniforme ou un flux de chaleur de densité uniforme. Le champ de température au sein du milieu évolue de T∝ à T0, mais cette évolution est principalement confinée au voisinage de s dans un hémisphère de rayon 10a. La résistance de constriction dans ce milieu peut être déterminée analytiquement. La condition aux limites sur la zone de contact réelle est soit une condition de température imposée, soit une condition de flux imposé. Les valeurs des résistances de constriction (en K/W) obtenues sont les

suivantes : $R_c = \dfrac{8}{3\pi^2} \dfrac{1}{ka}$ pour une condition de flux imposé sur le disque de rayon a et $R_c = \dfrac{1}{4ka}$ pour

une condition de température imposée.

La résistance de constriction apparaît donc inversement proportionnelle à la dimension caractéristique a et non à sa surface s. Elle dépend aussi du type de condition thermique imposée sur la surface s. La résistance de contact est un peu plus faible pour une condition de température que pour une condition de densité de flux uniforme. Dans la réalité, les conditions thermiques sont intermédiaires à ces deux types de conditions et les valeurs de résistances de constriction sont situées entre ces deux situations.

Quand les lignes de flux de chaleur sont canalisées dans un tube de diamètre fini, le phénomène de constriction est plus faible que dans un milieu semi-infini. Dans ce cas pour une condition de température imposée

et $\dfrac{a}{b} \leq 0.3$, où b est le rayon dudit tube :

$$R_c = \dfrac{1}{4ka}\left(1 - 1,41\dfrac{a}{b}\right)$$

Enfin, dans le cas des couches minces, lorsque l'épaisseur de la couche diminue, la résistance de constriction dépend aussi de la condition aux limites sur la face opposée à la zone de contact.

Ainsi pour des conditions aux limites de flux imposées sur le disque de rayon a, de même que sur la face opposée, la résistance thermique de contact est plus élevée que pour un milieu épais. L'expression de la résistance de contact est alors :

$$R_c = \dfrac{1}{4ka}\left(1 - 1.41\dfrac{a}{b}\right)f(l,a,b)$$ avec $f(l,a,b) \geq 1$,

où l est l'épaisseur de la couche. et f représente une fonction qui module $R_c$ selon les paramètres géométriques. En réalité, la résistance thermique comporte deux composantes issues :

- d'une part de la convergence des lignes de courant thermique vers la zone de température la plus faible selon les mécanismes évoqués ci-dessus ; il convient donc que les zones de contact soient de taille réduite de façon à générer des régions de constriction,
- et d'autre part de la résistance de contact aux interfaces des couches minces assurant le contact. Généralement le contact entre deux milieux solides ne s'effectue qu'en un certain nombre de zones de faible surface selon la rugosité (≈1 %) entre lesquelles subsiste un milieu interstitiel ( dans le cas des microbolomètres, on peut considérer qu'il s'agit du vide). Comme la conductivité du milieu interstitiel est faible devant celles des milieux en contact, il se produit une convergence des lignes de flux vers les zones de contact qui provoque un effet de micro-constriction analogue à celui décrit précédemment mais à l'échelle de la microstructure ou de la nanostructure.

En définitive cette analyse montre que l'on peut accroître l'isolation thermique des membranes bolométriques en jouant sur plusieurs facteurs. Ainsi, l'effet de constriction peut être amélioré en jouant sur la forme et les dimensions du contact, donc des zones support ou piliers. Il est surtout important pour les milieux isolants. L'effet de résistance de contact (micro constriction au niveau des surfaces en contact) dépend essentiellement de la structure métallurgique des matériaux utilisés. A cet égard, les matériaux poreux comme les aérogels, les xérogels peuvent être avantageusement utilisés.

## BREVE DESCRIPTION DES FIGURES

La manière dont l'invention peut être réalisée et les avantages qui en découlent, ressortiront mieux des exemples de réalisation qui suivent, donnés à titre indicatif et non limitatif à l'appui des figures annexées.

Les figures 1 et 2 illustrent, comme déjà dit, un détecteur bolométrique élémentaire de l'art antérieur vu en perspective et du dessus.
Les figures 3 et 4 illustrent de manière schématique une première forme de réalisation de l'invention.
Les figures 5 et 6 illustrent une seconde forme de réalisation de l'invention.
La figure 7 est une représentation schématique en section transversale d'un détail d'une membrane bolométrique conforme à l'invention.
Les figures 8 à 10 sont des vues analogues à la figure 7, d'autres membranes conformes à l'invention.

La figure 11 vise à illustrer le contact entre un matériau poreux et une surface lisse.

On a donc illustré en relation avec les figures 3 et 4 un premier principe de mise en oeuvre de l'invention. Selon celui-ci, les plots ou piliers (3) sont de facture traditionnelle, mais sont fixés au niveau de leur extrémité supérieure, non pas directement sur la membrane bolométrique (2), mais sur un cadre intermédiaire (9), qui permet de décorreler la fabrication des bras d'isolation, des pointes ou micropointes (7) décrites ci-après, de la membrane (2). Ce cadre intermédiaire correspond à l'élément associé mentionné précédemment dans le cadre de la définition générale de l'invention.

Le cadre (9) peut être réalisé en tout matériau. Cependant, on préférera utiliser un matériau choisi dans le groupe comprenant SiO, SiN, TiN ou en un matériau constitutif de la partie active suspendue.

Ce cadre (9) est muni de micropointes (7), dont le bout effilé est en contact avec la membrane bolométrique (2). Ces micropointes sont directement issues du cadre, et sont donc réalisées en un même matériau que ce dernier. Cependant, il peut parfaitement être envisagé de réaliser lesdites micropointes en un matériau différent.

En outre, le cadre et les micropointes sont conductrices de l'électricité. Cependant, cette conduction peut n'être que partielle, dans la mesure ou tant le cadre que les micropointes peut avoir une âme conductrice recouverte d'un matériau isolant ou l'inverse, c'est à dire, une âme réalisée en un matériau isolant, recouverte d'une couche conductrice. En outre, les matériaux entrant dans la constitution des micropointes ne sont pas nécessairement identiques à ceux mis en oeuvre pour la réalisation du cadre.

Selon la configuration de la figure 3, les zones de constriction des lignes de flux thermique sont principalement situées au niveau de la membrane (2).

La figure 4 est analogue à la figure 3, à l'exception du fait que les micropointes (8) présentent une configuration sensiblement inversée, puisque leur bout effilé est dirigé vers le cadre. Dans cette configuration, les micropointes peuvent être issues de ladite membrane, ou être réalisées en un autre matériau. En outre, les zones de constriction des lignes de flux thermique sont principalement situées au niveau du cadre.

Les plots ou piliers (3) reposant sur le circuit de lecture, le cadre (9) et la membrane bolométrique (2) sont réalisés selon des procédés classiques en vigueur dans la microélectronique et les microtechnologies.

La réalisation des micropointes dirigées vers la membrane (2) peut s'effectuer, par exemple, de la manière suivante. Une couche de résine photosensible est étalée sur la structure destinée à constituer ladite micropointe. Un disque, dont le diamètre correspond sensiblement à deux fois l'épaisseur de la couche constitutive de la structure est lithographié. L'ensemble est alors immergé dans une solution d'attaque appropriée en fonction de la nature du matériau. La vitesse d'attaque horizontale entraînant la surgravure sous le masque de résine est égale à la vitesse d'attaque verticale. La structure évolue au cours du temps en forme de micropointes.

Bien évidemment, cette méthode doit être adaptée à !'empilement sous jacent déjà présent. En particulier le(s) matériau(x) constituant les pointes peut (peuvent) être isolant (s) ou conducteur (s) de l'électricité, comme par exemple de la silice ou un nitrure.

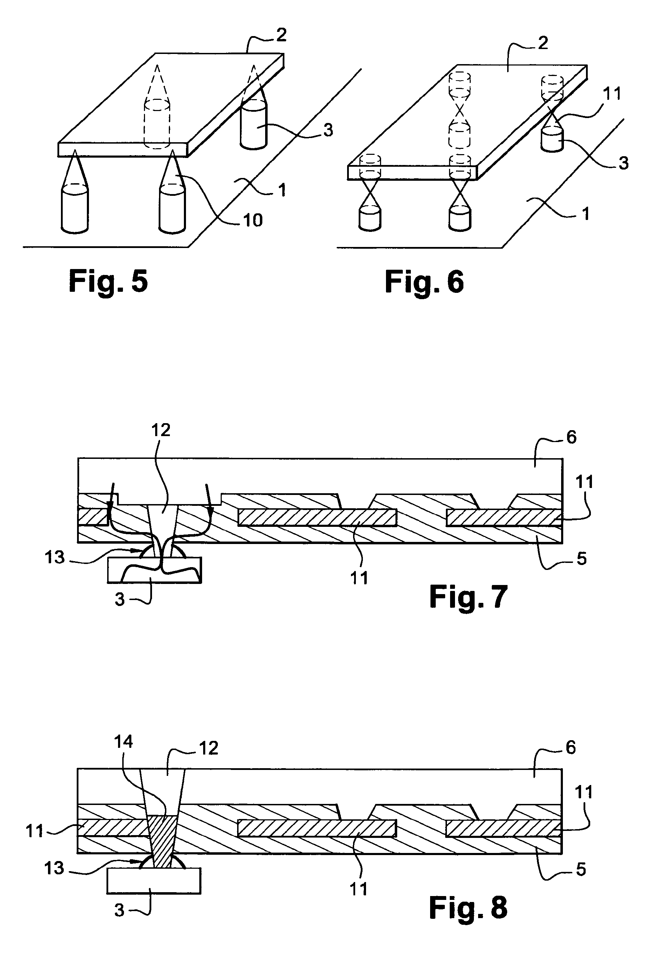

Selon une seconde configuration de l'invention, telle que représentée en relation avec les figures 5 et 6, la membrane bolométrique repose directement sur des micropointes (10, 11) situées dans le prolongement des piliers ou zone support (3), donc en l'absence de tout cadre intermédiaire.

Au sein de la figure 5, le matériau constitutif des micropointes est différent de celui de la membrane et des zones support. En revanche, dans la configuration décrite en relation avec la figure 6, dans laquelle les micropointes sont montées tête-bêche, le matériau desdites pointes et de la membrane (2) sont identiques.

Selon un mode avantageux de réalisation, la membrane présente également des bras d'isolation, permettant ainsi d'augmenter la résistance thermique.

Ladite membrane est quant à elle réalisée selon les techniques conventionnelles.

Ainsi, la structure (5) supportant le matériau thermomètre (6) est constituée de deux couches isolantes enfermant des électrodes métalliques. La couche isolante déposée sur la couche métallique constitutive des électrodes, comporte des ouvertures de contact de manière à connecter la thermistance. La gravure du matériau thermomètre permet de dégager les matériaux dans les régions séparant les détecteurs (réticulation).

Dans une autre forme de réalisation, également connue, la structure supportant le matériau bolométrique est constituée d'une couche isolante sur laquelle reposent des électrodes métalliques totalement en contact avec la thermistance. La gravure du matériau thermomètre permet de dégager les matériaux dans les régions séparant les détecteurs.

Ce type d'empilement conduit à un composant optimisé en termes de signal sur bruit.

Ces structures peuvent être élaborées suivant différents procédés qui conduisent à la fabrication de microponts.

La technologie des microbolomètres est réalisée sur une couche sacrificielle, par exemple en polyimide d'épaisseur comprise entre 1 et 5$\mu$m, préférentiellement égale au quart de la longueur d'onde à détecter, de manière à constituer entre les électrodes et le réflecteur (matériau métallique déposé sur le circuit de multiplexage ou circuit de lecture) une cavité quart d'onde conduisant au maximum d'absorption.

Les couches minces (par exemple d'épaisseur comprise entre 0.005 $\mu$m et 0.1 $\mu$m) des éléments isolants (SiN, SiO, ZnS, etc..) sont obtenues à l'aide des techniques de dépôt basse température, habituellement utilisées pour ces matériaux : pulvérisation cathodique, décomposition plasma (PECVD). La gravure de ces matériaux est généralement réalisée par des procédés d'attaque chimique assistés par plasma.

Les matériaux métalliques (Ti, TiN, Pt ,etc..) constituant les électrodes sont préférentiellement déposés par pulvérisation cathodique. Ces métallisations sont définies par des procédés de gravure chimique ou par plasma. L'épaisseur de ces couches est comprise entre 0.005 $\mu$m et 0.1 $\mu$m. La résistance par carré de la couche constituant les électrodes sera ajustée de façon à favoriser l'absorption du rayonnement IR.

Le matériau thermomètre peut être un semiconducteur amorphe ou polycristallin (Si, Ge, SiC, a-Si:H, a-SiC:H, a-SiGe:H, etc.), obtenu à l'aide des techniques de dépôt basse température, habituellement utilisées pour ces matériaux : pulvérisation cathodique, décomposition thermique (LPCVD) ou plasma (PECVD).

Le dopage éventuel de ces couches est réalisé en introduisant un gaz dopant (BF3, PH3, etc.) dans le réacteur ou bien par implantation ionique. La gravure de ces matériaux est généralement réalisée par des procédés d'attaque chimique assistée par plasma. Il peut s'agir également d'un matériau métallique ou encore d'un oxyde de vanadium ou de ferrite.

Le procédé de gravure de la couche sacrificielle est adapté à la nature de celle-ci. Il s'agit préférentiellement d'un procédé de gravure par plasma.

On a décrit en relation avec la figure 7 un premier mode de réalisation d'une zone de constriction au voisinage de la membrane bolométrique conformément à l'invention.

Dans cet exemple, l'ouverture du trou (12) dans les couches (5, 6) constituant la structure bolométrique et la couche sacrificielle (non représentée) est réalisée d'une part à partir de moyens de photolithographie électronique ou optique haute résolution, et d'autre part à l'aide d'équipements de gravure sèche. Associées à des technologies classiques (techniques des espaceurs, ..), des trous de 50 nm sont aujourd'hui réalisables (de nombreuses publications en font état, telle que par exemple « Fabrication of thin-film metal nanobridges » - Ralls et al-Appl. Phys. Letter 55(23), 4 December 1989).

De surcroît, les dimensions du pivot (13) situé entre la face inférieure de la membrane et le support (cadre (9) ou zone de support (3)) peuvent toujours être réduites par un procédé de gravure isotrope par plasma et adapté au matériau thermomètre, favorisant en cela l'isolation thermique de ladite membrane.

Afin d'accroître encore la résistance thermique, la rugosité de l'interface avec le support (cadre (9) ou zone de support (3)) peut être générée lors des dépôts des couches minces. Toutefois, une telle rugosité peut être plus sûrement obtenue par des traitements thermiques appropriés, qui laissent apparaître des vides de matière résultant de l'interdiffusion des matériaux. Un traitement chimique adéquat peut également être utilisé pour graver les régions interdiffusées, voire simplement dégager les joints de grain. Bien que la surface des matériaux en contact soit relativement importante, la surface effective de contact thermique se situe autour de 1 % de celle-ci.

Dans la configuration décrite en relation avec la figure 8, la constriction des lignes de flux thermique est obtenue à l'aide de matériaux poreux, par exemple de type aérogel, à base de silice ou de polymères carbonés (tels que décrit dans le document « ordered porous materials for emerging applications » - NATURE - Vol.417 - 20 Juin 2002)

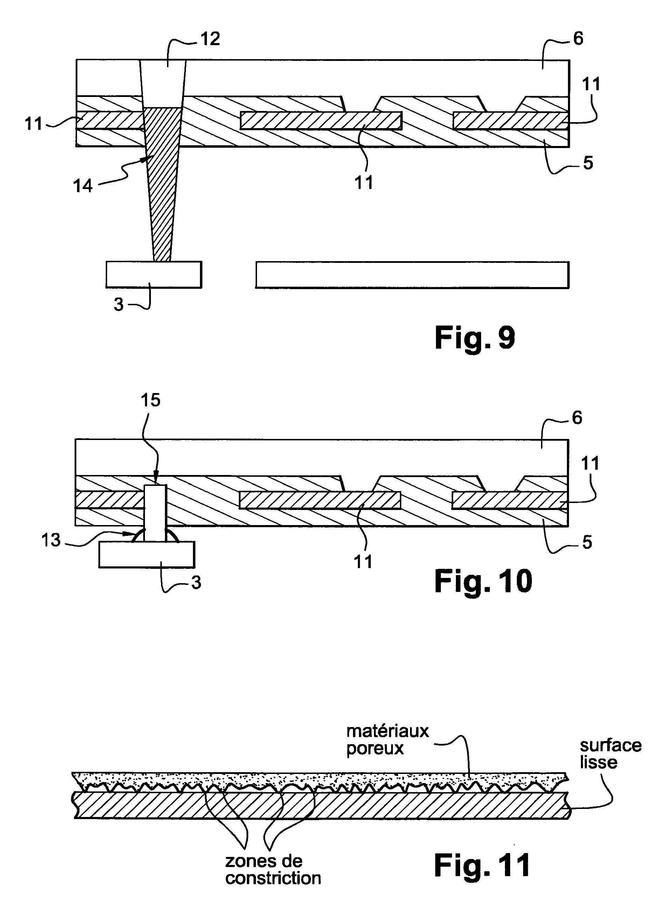

On a représenté schématiquement sur la figure 11 le contact entre un matériau poreux et une surface lisse. On peut notamment y observer que ce contact est en fait constitué d'une pluralité de zones configurées en pointe, résultant de la physique même du matériau poreux mis en oeuvre, et susceptibles de constituer autant de zones de constriction recherchées au sens de la présente invention.

Selon cette configuration (figure 8), l'ouverture du trou (12) à travers les couches (5, 6) de la structure bolométrique est réalisée de la même manière que précédemment. Le matériau constituant la pointe est déposé sur toute la surface du dispositif préférentiellement par voie sol-gel. Ce matériau est ensuite gravé (procédé de gravure auto-aligné) pour localiser les pointes au niveau des trous et pour constituer les appuis de la membrane bolométrique.

Selon la nature du matériau utilisé pour réaliser la pointe de contact, la contribution de celui-ci à la résistance thermique n'est pas négligeable vis à vis de la constriction pure. C'est particulièrement vrai lorsque la pointe est réalisée à partir de matériau de type aérogel de très faible conductivité thermique, tel qu'un gel à base de silice. En effet, ces matériaux une fois sous vide possède une conductivité thermique de l'ordre de 0.02Wm$^{-1}$K$^{-1}$, soit deux ordres de grandeur au-dessous de celle de l'oxyde ou du nitrure de silicium. La résistance thermique de constriction et la résistance thermique de la pointe sont alors en série et donc s'ajoutent, ce qui améliore le comportement du dispositif.

Les aérogels sont des matériaux extrêmement poreux (porosité comprise entre 84% et 99.5%). Ils sont réalisés par procédé sol-gel. Ainsi, la préparation d'un aérogel passe par l'obtention d'un gel. Celui-ci peut être obtenu simplement par déstabilisation d'un sol, constitué d'une suspension de particules de silice dans l'eau. L'agrégation des particules conduit à la formation d'un gel. On peut également hydrolyser un organosilicate en solution dans un alcool, pour provoquer la polycondensation des radicaux. Dans certaines conditions chimiques (pH basique), on forme ainsi des particules qui s'assemblent ensuite comme dans le cas précédent. En solution neutre ou acide, la polycondensation conduit à la formation d'un polymère et donne également naissance à un gel.

Le matériau solide poreux appelé aérogel est obtenu en séchant le gel. Un séchage à l'air libre provoque la densification et souvent la fracturation du squelette solide : au cours du séchage, la surface de séparation air-liquide se propage dans la structure, et les forces capillaires déforment fortement le réseau. Pour obtenir un aérogel, on porte le solvant dans des conditions de température et de pression supérieures au point critique. Le solvant peut alors être évacué sans dommage pour la partie solide. La densité macroscopique obtenue dépend de la concentration initiale de la solution en organosilicate. Elle peut être très faible : des aérogels de densité 4 kg/m$^3$ peuvent être réalisés. Il est également possible d'utiliser des aérogels conducteurs de l'électricité pour assurer la liaison électrique entre la membrane bolométrique et le support / cadre ou le circuit de lecture. Les aérogels carbonés ou organiques présentent à cet égard des résistivités électriques qui conviennent parfaitement.

La représentation de la figure 9 est analogue à la celle de la figure 8, en ce sens qu'elle met également en oeuvre une pointe en un matériau aérogel. Cependant, elle a pour vocation d'illustrer la zone de constriction au niveau des interfaces pointe - cadre ou pointe - substrat ou circuit de lecture.

Enfin, la figure 10 illustre le principe de constrictions des lignes de flux thermique à partir de nanotubes ou de nanofils. Dans cette configuration, la pointe est réalisée en un nanotube ou un nanofil de carbone.

La croissance d'un nanotube de carbone est catalytique, c'est à dire qu'elle nécessite la formation de clusters de catalyseur. La croissance peut être effectuée dans un bâti PECVD (selon l'expression anglo-saxonne *«Plasma Enhanced Chemical Vapor Deposition »)* à une température compatible avec le circuit de lecture. Un flux d'acétylène et d'ammoniac est introduit dans la chambre de croissance et par décomposition thermique permet la formation des parois du nanotube. L'ammoniac permet de graver le carbone graphite formé sur le sommet du tube. Le plasma, outre sa fonction de générateur de particules de carbone, oriente grâce à la tension appliquée les nanotubes verticalement. La taille du plot de catalyseur détermine le diamètre du nanotube.

Il ressort de la présente invention l'avantage suivant. Avec les piliers classiques de l'art antérieur, on dispose d'une section ou d'un diamètre minimum de 1 $\mu$m. En revanche, les pointes mises en oeuvre dans le cadre de la présente invention peuvent présenter un diamètre de l'ordre de 100 Å, voire même de l'ordre de 10 Å pour les nanotubes. Ce faisant, comme on a montré que la résistance de constriction était inversement proportionnelle au diamètre desdites zones de constriction, on gagne par rapport aux piliers classiques un facteur 100, voire un facteur 1.000 pour les nanotubes, et donc corollairement, on améliore de manière très significative la résistance thermique et donc l'isolation thermique de la membrane suspendue. En finale, ce sont les performances des dispositifs de détection mettant en oeuvre de tels détecteurs bolométriques qui s'en trouvent notablement améliorées. De manière connue, ces détecteurs bolométriques sont agencés de manière linéaire ou matricielle.

**Revendications**

1. Détecteur bolométrique comprenant :

   - une partie absorbante; destinée à transformer un rayonnement électromagnétique incident en calories ;
   - une partie active (2), elle-même constituée :

     • d'une zone sensible (6) réalisée en un matériau bolométrique, dont la résistivité varie, de manière connue, avec la température ;
     • d'électrodes (11) en contact avec le matériau bolométrique (6) sur au moins partie de leur surface ;

   - des piliers (3), destinés à maintenir ladite partie active (2) suspendue au dessus d'un substrat (1) recevant notamment le circuit de lecture associé audit détecteur, et à assurer la conduction électrique entre ledit circuit de lecture et ladite partie active ;

   *caractérisé* **en ce que** lesdits piliers (3) présentent des régions de section non uniforme entre leur point de contact avec le substrat (1) et leur zone de solidarisation à la partie active, ou sont associés à des éléments (9) présentant de telles non-uniformités, ces non-uniformités étant propres à générer à leur niveau une zone de constriction des flux thermiques susceptibles de s'établir entre ladite partie active (2) et le substrat, lesdits piliers étant directement en contact entre le substrat (1) et la partie active (2), ou entre le substrat (1) et lesdits éléments associés (9).

2. Détecteur bolométrique selon la revendication 1, *caractérisé* **en ce que** lesdites régions à section non-uniforme se présentent sous la forme de pointes ou d'étranglements (7, 8).

3. Détecteur bolométrique selon la revendication 2, *caractérisé* **en ce que** les pointes ou étranglements sont réalisés dans le même matériau que celui de la partie active.

4. Détecteur bolométrique selon la revendication 2, *caractérisé* **en ce que** les pointes ou étranglements sont réalisés en au moins un matériau différent de celui de la partie active.

5. Détecteur bolométrique selon l'une des revendications 2 à 4, *caractérisé* **en ce que** les éléments associés (9) de la partie active suspendue, présentant des non-uniformités, sont réalisés en au moins un matériau choisi dans le groupe comprenant SiO, SiN, TiN ou en un matériau constitutif de ladite partie active suspendue.

6. Détecteur bolométrique selon la revendication 1, *caractérisé* **en ce que** lesdites régions à section non-uniforme sont réalisées en un matériau poreux.

7. Détecteur bolométrique selon la revendication 6, *caractérisé* **en ce que** le matériau poreux est réalisé en un aérogel.

8. Détecteur bolométrique selon la revendication 7, *caractérisé* **en ce que** l'aérogel est réalisé à partir de silice.

9. Dispositif de détection de rayonnement infrarouge *caractérisé* **en ce qu'**il intègre une pluralité de détecteurs bolométriques selon l'une des revendications 1 à 8.

10. Dispositif de détection de rayonnement infrarouge selon la revendication 9, *caractérisé* **en ce que** les détecteurs bolométriques sont agencés de manière linéaire ou matricielle.


**Claims**

1. A bolometric detector comprising:

    - an absorbing part intended to convert incident electromagnetic radiation into calories,
    - an active part (2) which itself consists of:

        • a sensitive area (6) made of a bolometric material the resistivity of which varies, in a known manner, with temperature,
        • electrodes (11) that are in contact with the bolometric material (6) over at least part of their surface area,

    - support areas or posts (3) intended to maintain said active part (2) suspended above a substrate (1) that accommodates, in particular, the readout circuit associated with said detector and to ensure electrical conduction between said readout circuit and said active part,

    *characterised* **in that** said support areas or posts (3) have regions of non-uniform cross-sectional area between their point of contact with the substrate (1) and the area where they are joined to the active part or are associated with elements (9) that have such non uniformities, these non uniformities being suitable for creating at their level an area where constriction of thermal flux between said active part (2) and the substrate is likely to occur, said support areas or posts being directly into contact with the substrate (1) and the active part (2), or with the active part and said associated elements (9).

2. A bolometric detector as claimed in claim 1, *characterised* **in that** said regions that have a non-uniform cross-section are in the form of spikes or chokes (7, 8).

3. A bolometric detector as claimed in claim 2, *characterised* **in that** the spikes or chokes are made of the same material as that of the active part.

4. A bolometric detector as claimed in claim 2, *characterised* **in that** the spikes or chokes are made of at least one material that is different to that of the active part.

5. A bolometric detector as claimed in any of claims 2 to 4, *characterised* **in that** the associated elements (9) of the suspended active part having non-uniformities are made of at least one material selected from the group comprising SiO, SiN, TiN or of a material that constitutes the said suspended active part.

6. A bolometric detector as claimed in claim 1, *characterised* **in that** said regions having a non-uniform cross-section are made of a porous material.

7. A bolometric detector as claimed in claim 6, *characterised* **in that** the porous material is made of an aerogel.

8. A bolometric detector as claimed in claim 7, *characterised* **in that** this aerogel is made from silica.

9. A device for detecting infrared radiation *characterised* **in that** it incorporates a plurality of bolometric detectors as claimed in any of claims 1 to 8.

10. A device for detecting infrared radiation as claimed in claim 9, *characterised* **in that** the bolometric detectors are designed as a linear or array configuration.


**Patentansprüche**

1. Bolometrischer Detektor, umfassend:

    - einen absorbierenden Teil, der dazu bestimmt ist, eine einfallende elektromagnetische Strahlung in Kalorien umzuwandeln;
    - einen aktiven Teil (2), der seinerseits besteht aus:

        • einer empfindlichen Zone (6), die aus einem bolometrischen Werkstoff hergestellt ist, dessen Resistivität sich kontinuierlich mit der Temperatur ändert;
        • Elektroden (11), die mit dem bolometrischen Werkstoff (6) mindestens auf einem Teil ihrer Oberfläche in Kontakt sind;

- Säulen (3), die dazu bestimmt sind, den aktiven Teil (2) über einem Substrat (1) aufgehängt zu halten, das insbesondere den dem Detektor zugeordneten Lesekreis aufnimmt, und die Wärmeleitung zwischen dem Lesekreis und dem aktiven Teil zu gewährleisten;

**dadurch gekennzeichnet, dass** die Säulen (3) Bereiche von nichtgleichförmigem Querschnitt zwischen ihrem Kontaktpunkt mit dem Substrat (1) und ihrer Befestigungszone an dem aktiven Teil aufweisen oder Mitteln (9) zugeordnet sind, die solche Nichtgleichförmigkeiten aufweisen, wobei diese Nichtgleichförmigkeiten in der Lage sind, auf ihrer Höhe eine Zone der Einschnürung der Wärmeströme zu erzeugen, die zwischen dem aktiven Teil (2) und dem Substrat auftreten können, wobei die Säulen zwischen dem Substrat (1) und dem aktiven Teil (2) oder zwischen dem Substrat (1) und den zugeordneten Elementen (9) direkt in Kontakt sind.

2. Bolometrischer Detektor nach Anspruch 1, **dadurch gekennzeichnet, dass** die Bereiche mit nichtgleichförmigem Querschnitt in der Form von Spitzen oder Querschnittsverminderungen (7, 8) vorliegen.

3. Bolometrischer Detektor nach Anspruch 2, **dadurch gekennzeichnet, dass** die Spitzen oder Querschnittsverminderungen aus demselben Werkstoff wie der aktive Teil hergestellt sind.

4. Bolometrischer Detektor nach Anspruch 2, **dadurch gekennzeichnet, dass** die Spitzen oder Querschnittsverminderungen aus mindestens einem anderen Werkstoff als der aktive Teil hergestellt sind.

5. Bolometrischer Detektor nach einem der Ansprüche 2 bis 4, **dadurch gekennzeichnet, dass** die Nichtgleichförmigkeiten aufweisenden zugeordneten Elemente (9) des aufgehängten aktiven Teils aus mindestens einem Werkstoff, der aus der SiO, SiN, TiN umfassenden Gruppe ausgewählt ist, oder aus einem den aufgehängten aktiven Teil bildenden Werkstoff hergestellt sind.

6. Bolometrischer Detektor nach Anspruch 1, **dadurch gekennzeichnet, dass** die Bereiche mit nichtgleichförmigem Querschnitt aus einem porösen Werkstoff hergestellt sind.

7. Bolometreischer Detektor nach Anspruch 6, **dadurch gekennzeichnet, dass** der poröse Werkstoff aus einem Aerogel hergestellt ist.

8. Bolometrischer Detektor nach Anspruch 7, **dadurch gekennzeichnet, dass** das Aerogel aus Siliciumoxid hergestellt ist.

9. Vorrichtung zur Erfassung von Infrarotstrahlung, **dadurch gekennzeichnet, dass** in sie eine Mehrzahl von bolometrischen Detektoren nach einem der Ansprüche 1 bis 8 integriert ist.

10. Vorrichtung zur Erfassung von Infrarotstrahlung nach Anspruch 9, **dadurch gekennzeichnet, dass** die bolometrischen Dektektoren linear oder matriziell angeordnet sind.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

matériaux
poreux

surface
lisse

zones de
constriction

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5021663 A

- US 5367167 A

**Littérature non-brevet citée dans la description**

- **RALLS et al.** Fabrication of thin-film metal nano-bridges. *Appl. Phys. Letter,* 04 Décembre 1989, vol. 55, 23

- ordered porous materials for emerging applications. *NATURE,* 20 Juin 2002, vol. 417